# EUROPEAN PATENT SPECIFICATION

(11) **EP 3 160 913 B1**
(45) Date of publication and mention of the grant of the patent: **26.05.2021**
(21) Application number: 15747833.0
(22) Date of filing: 26.06.2015
(51) Int. Cl.: C02F 11/125, C02F 1/02, C02F 11/10, C02F 11/18, C02F 11/00, C02F 11/14, C02F 103/28

(54) **A METHOD FOR THE TREATMENT OF BIOSLUDGE**
VERFAHREN ZUR BEARBEITUNG VON BIOSCHLAMM
PROCÉDÉ POUR LE TRAITEMENT DE BOUES BIOLOGIQUES

(30) Priority: 30.06.2014 FI 20145633
(43) Date of publication of application: 03.05.2017
(73) Proprietor: UPM-Kymmene Corporation, 00100 Helsinki (FI)
(72) Inventor: HASSINEN, Esa, FI-53500 Lappeenranta (FI); TALIKKA, Lauri, FI-53100 Lappeenranta (FI); RAUKOLA, Antti, FI-36200 Kangasala (FI); HALINEN, Markku, FI-02360 Espoo (FI); NORDBÄCK, Kaj, FI-67100 Kokkola (FI); RÖNNQVIST, Andreas, FI-68570 Luoto (FI); TIKKA, Matti, FI-45700 Kuusankoski (FI)
(74) Representative: Papula Oy
(86) International application number: PCT/FI2015/050470
(87) International publication number: WO 2016/001484

(56) References cited:
- EP-A1- 0 018 348
- EP-A1- 0 840 711
- EP-A1- 2 612 842
- CN-A- 102 515 887
- GB-A- 2 036 787
- US-A- 3 697 417
- US-A1- 2004 168 990
- US-A1- 2007 221 346
- US-A1- 2009 000 752
- US-A1- 2009 130 733
- US-A1- 2010 132 421

## Description

### FIELD OF THE INVENTION

The invention relates to a method for the treatment of biosludge.

### BACKGROUND OF THE INVENTION

Pulp and paper industry waste waters typically contain wood, either in its original form or in an altered form (e.g. as lignin, starch, alcohols). Waste waters also contain a variety of process substances and chemicals, also either in their original form or in a form altered in some way.

The content of compounds harmful for the environment in effluent or waste water coming from plants such as pulping processes or from municipal sewage is currently quite strictly controlled for environmental reasons. Plants employ various types of solutions that are used for waste water treatment in order to ensure that environmental regulations are fulfilled for the plant.

Most effluents of pulp and paper industry are treated in biological sewage treatment plants (active sludge plants). Some of them treat also effluents from the surrounding community. Biological waste water treatment systems can be used especially for decreasing the amount of small-molecule organic substances. Biological purification uses the ability of the microorganisms to live in effluents. Microorganisms dissipate dissolved and colloidal wastes using them as nutrition. Wastes are removed partly as biological mass and partly by transforming them to carbon dioxide and water.

Waste water treatment processes typically involve a number of chemical and mechanical phases. At an early phase, fibrous primary sludge is removed from the waste water. Then the pH may be adjusted, as the most suitable pH for the biological sludge is 7 - 7.5 and a suitable range is 6.8 - 8. The pH is controlled by dosing alkaline (usually lime CaCO₃) or acid to the effluent before aeration depending on incoming effluent pH. The nutrient concentration of the remaining waste water may also be adjusted, as the subsequent aerobic treatment using bacterial processes requires an amount of nutrients. In biological purification natural microbes are used, which use organic materials of effluent as their nutrition. Biological purification methods may include, for example, active sludge process, anaerobic treatment, biological filtration and an aerated pond. The bacteria present in the biological processes oxidatively degrade organic compounds present in the waste water, thus lowering the chemical oxygen demand (COD). As oxygen is required in the process, it may be added by aeration. After the bacterial processes have operated for a sufficient time, for instance approx. three weeks, biosludge is separated from the waste water.

Usually, sludges are processed after thickening in a drain tape press and burned in a bark boiler together with bark originating from wood debarking, and the ash is located in a landfill. Sludges can also be treated biologically by anaerobic digesting to provide valuable biogas or by composting wherein sludges can be utilized as a fertilizer or in landscaping. Disposal of the biosludge currently poses various problems, however. It has a foul smell and is potentially harmful to the environment, as it contains bacteria and other possible microorganisms. It typically also contains a large amount of phosphorus, other nutrients, potassium, chloride, residues of chemicals, various non-process elements (NPEs) and heavy metals. Biosludge retains a large amount of water, so disposal of the biosludge by burning is not particularly energy efficient, even if some of the water is removed e.g. by centrifugation prior to burning. Pulp production plants often mix the biosludge with black liquor, but the NPEs of the biosludge tend to interfere in these processes. If the biosludge is fed to a soda recovery unit, it may cause problems in the soda recovery e.g. due to the presence of NPEs. For instance, the presence of potassium and chloride may cause the formation of slag in the heat delivery surfaces of the soda recovery unit, thus lowering the heat production ability of the soda recovery unit. Biosludge has also been burned in a combined heat and power boiler, e.g. after it has been mixed with fibrous primary sludge. However, the combined heat and power boilers of some pulp production plants may have significant downtime, in particular during the summer, during which other methods of disposing of the biosludge need to be employed.

The inventors have recognized the need for a method for the treatment of biosludge.

EP 0018348 describes a method for the treatment of sewage sludge.

US 3,697,417 describes a process for the heat treatment of sewage sludge.

US 2009/0130733 describes a method for producing a hydrolyzed, sterile, denatured product from infectious organic waste material.

### PURPOSE OF THE INVENTION

The purpose of the invention is to provide a new type of method for the treatment of biosludge.

### SUMMARY

The method according to the present invention is characterized by what is presented in the claims.

### BRIEF DESCRIPTION OF THE DRAWINGS

The accompanying drawing, which is included to provide a further understanding of the invention and constitutes a part of this specification, illustrates an embodiment of the invention and together with the description helps to explain the principles of the invention. In the drawing:

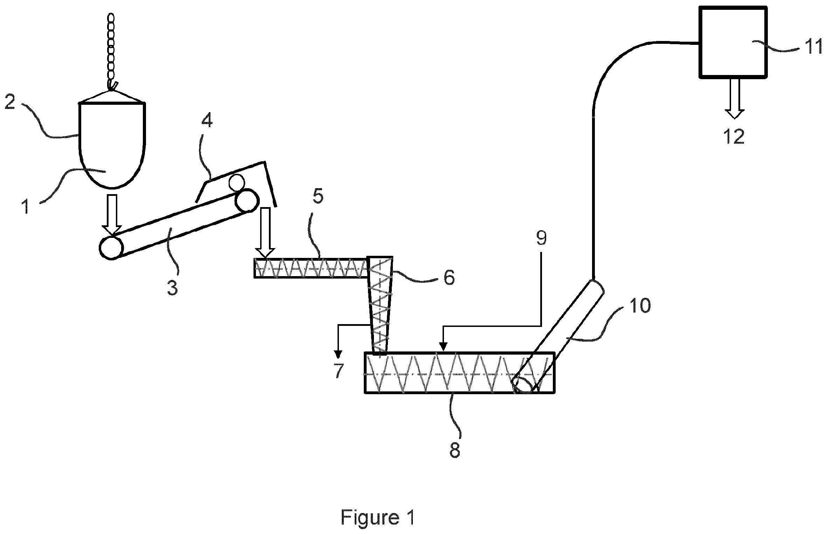

Fig. 1 is a schematic of a reactor system for implementing the method according to one embodiment of the present invention.

### DETAILED DESCRIPTION OF THE INVENTION

The present invention relates to a method for the treatment of biosludge, wherein the method comprises
- mixing biosludge with a bio-based material to form a mixture, wherein the dry matter of the biosludge is at least 0.01 % (w/w) of the total dry matter of the mixture, and wherein the bio-based material is bark;
- treating the mixture at a temperature in the range of 160 - 295°C under pressure in the presence of steam; and
- releasing the pressure suddenly or explosively to disrupt the structure of the mixture.

The term "biosludge" should be understood as referring to sludge obtainable from biological waste water treatment, i.e. residual, semi-solid material left from a biological waste water treatment process. Biosludge typically contains various organic, inorganic and microbiological contaminants.

The biosludge and the bio-based material may be mixed e.g. by mixing them using suitable equipment such as a mixer or a blender prior to the treatment at a temperature in the range of 160 - 295°C under pressure in the presence of steam. The bio-based material may be crushed, shredded or milled. For instance, the bio-based material may be hammer milled prior to mixing.

The treatment at a temperature in the range of 160 - 295°C under pressure in the presence of steam may be done e.g. in a reactor vessel. A suitable reactor vessel may be e.g. a reactor or a plug screw. During the treatment at a temperature in the range of 160 - 295°C under pressure in the presence of steam the mixture hydrolyzes to some extent, and cellular structures present in the mixture are disintegrated. For instance, acetic acid may be formed in the mixture during the treatment. Some components such as lignin contained in the mixture may be released from cell walls and be more evenly distributed in the mixture. This may render the mixture more amenable to further physical and/or chemical treatments.

The pressure may be released e.g. by forcing the mixture treated at a temperature in the range of 160 - 295°C under pressure in the presence of steam through a discharge gate. The pressure behind the discharge gate should be lower than the pressure during the treatment at a temperature in the range of 160 - 295°C in the presence of steam.

As the pressure is released suddenly or explosively, the structure of the mixture, e.g. the structure of cell walls and fibers present in the biomass contained in the mixture, may rupture.

The pressure is released suddenly or explosively to disrupt the structure of the mixture.

In an embodiment, the dry matter of the biosludge is at least 0.1 % (w/w), or at least 1 % (w/w), or at least 2 % (w/w), or at least 5 % (w/w), or 0.01 - 40 % (w/w), or 0.1 - 20 % (w/w), or 1 - 10 % (w/w), or 2 - 5 % (w/w) of the total dry matter of the mixture.

The amount of the dry matter of the biosludge of the total dry matter of the mixture is not particularly limited. For instance, mixtures wherein dry matter of the biosludge is about 1 - 10 % (w/w) or about 2 - 5 % (w/w) of the total dry matter of the mixture may be sufficient to allow disposal of the biosludge produced in the waste water treatment process of a plant such as a pulping plant. Further, the maximum amount of the dry matter of the biosludge may vary e.g. depending on the water content of the biosludge, the bio-based material and the equipment used and may thus be more than 40 % (w/w) of the total dry matter of the mixture. The amount of the dry matter of the biosludge of the total dry matter of the mixture may be selected so that an even mixture is formed.

The steam may be formed during the treatment at a temperature in the range of 160 - 295°C under pressure, as water or moisture contained in the mixture evaporates, or it may be fed into the mixture during the treatment. The steam may be fed into the mixture. The steam may be fed during, prior to or both during and prior to the treating of the mixture at a temperature in the range of 160 - 295°C under pressure in the presence of steam.

The time required for treating the mixture at a temperature in the range of 160 - 295°C under pressure in the presence of steam may vary depending on a number of factors, such as the bio-based material, the temperature, the pressure and the size of the equipment used.

In an embodiment, the mixture is treated at a temperature in the range of 160 - 295°C under pressure in the presence of steam for 1 - 60 minutes, or for 1 - 5 minutes, or for 5 - 30 minutes.

The pressure required for treating the mixture at a temperature in the range of 160 - 295°C in the presence of steam may also vary depending on a number of factors, such as the bio-based material, the temperature and the equipment used.

In an embodiment, the pressure is at least 2 bar, or at least 3 bar, or at least 5 bar, or at least 10 bar, or in the range of 2 - 50 bar, or in the range of 3 - 10 bar, or in the range of 5 - 10 bar, or in the range of 10 - 20 bar.

In an embodiment, the pressure is sufficient to allow for releasing the pressure suddenly or explosively.

In an embodiment, the pressure is released to a pressure lower than 5 bar, or lower than 4 bar, or lower than 2 bar, or to about 1 bar, or to ambient pressure.

In an embodiment, the pressure is released by lowering the pressure by at least 50 % of the pressure, or by 60 % of the pressure, or by at least 70 % of the pressure, or by at least 75 % of the pressure.

In many embodiments, it is not necessary to release the pressure to an ambient pressure or a pressure of about 1 bar, provided the pressure is released to a significantly lower pressure.

The temperature required for treating the mixture under pressure in the presence of steam may also vary. For instance, if the biosludge contains a large amount of water, a higher temperature (and/or optionally a longer treatment time) may be required.

In an embodiment, the mixture is treated at a temperature in the range of 215 - 295°C, or in the range of 160 - 260°C, or in the range of 200 - 230°C, or in the range of 190 - 230°C or in the range of 190 - 220°C.

In an embodiment, the biosludge is pretreated prior to mixing with the bio-based material. The biosludge may be pretreated to raise the dry matter content of the biosludge. This may be done e.g. by centrifuging the biosludge. The pretreatment may raise the dry matter content of the biosludge by about 10 %, or even by about 15 %. In an embodiment, the biosludge is blended with fibrous primary sludge prior to mixing with the bio-based material.

The term "fibrous primary sludge" should be understood as referring to sludge obtainable from mechanical purification, e.g. preliminary clarification, of waste water. Fibrous primary sludge obtainable e.g. from waste water produced by a pulping process typically contains components derived from bark, fibers, various additives and pigments.

In an embodiment, the mixture is dewatered prior to treating the mixture at a temperature in the range of 160 - 295°C under pressure in the presence of steam. The dewatering may be done e.g. by compressing the mixture or by forcing the mixture with a plug screw. The method is not, however, particularly sensitive to the amount of water.

In an embodiment, the mixture is compressed to form a cake prior to treating the mixture at a temperature in the range of 160 - 295°C under pressure in the presence of steam.

The mixture may be compressed by forcing the mixture through a plug screw.

The mixture may also be compressed and the mixture or cake fed by forcing the mixture through a plug screw into a reactor for treating the mixture at a temperature in the range of 160 - 295°C under pressure in the presence of steam.

The mixture may be compressed to form a cake and the cake fed by forcing the mixture through a plug screw into a reactor for treating the mixture at a temperature in the range of 160 - 295°C under pressure in the presence of steam.

The compression may be done e.g. by forcing the mixture through a plug screw that has a downwards tapering cross-section. As the mixture is compressed, water is removed from the mixture. In such an embodiment, the mixture may form a pre-coat on the inner surface of the housing of the plug screw. Such a pre-coat may assist in the compression and/or the water removal.

In an embodiment, the mixture is impregnated with water or an aqueous solution prior to treating the mixture at a temperature in the range of 160 - 295°C under pressure in the presence of steam. The aqueous solution may be e.g. a dilute acid solution.

The method may be implemented as a continuous or a batch process.

The bio-based material may be dewatered prior to mixing with the biosludge. The dewatering increases its dry matter content and may reduce dewatering of the mixture in subsequent phases of the method, e.g. the pretreating of the mixture.

The bio-based material is or consists of bark.

Bark as a bio-based material exhibits a favourable compressibility and an ability to bind the mixture together. It may allow the biosludge to be provided in a form suitable for being compressed, e.g. using a plug screw, and fed into a reactor for treating it at a temperature of 160-295°C under pressure in the presence of steam. It may also make it possible to perform the method in a continuous manner. A mixture of biosludge with a bio-based material comprising bark may also have a favourable composition. A mixture of biosludge with a bio-based material comprising bark may also have a high energy content. It may thereby make the product of the method suitable for utilization, e.g. for being burned in a combined heat and power boiler or in a lime kiln, as the mixture may contain low amounts of harmful components such as potassium, chlorides and/or other non-process elements and the product may provide a relatively low amount of ash when burned, and the ash may have a favourable composition.

The presence of other bio-based materials or other components in the mixture is not necessarily excluded.

The bark may be milled or crushed.

In an embodiment, the bio-based fibrous material comprises a wood-based fibrous material, peat, fibrous primary sludge, or any mixture thereof.

In an embodiment, the bio-based fibrous material comprises a material selected from the group consisting of a wood-based fibrous material, peat, fibrous primary sludge, and any mixture thereof.

In an embodiment, the bio-based fibrous material is or consists of a material selected from the group consisting of a wood-based fibrous material, peat, fibrous primary sludge, and any mixture thereof.

In an embodiment, the wood-based fibrous material comprises crushed recycled wood material, wood chips, saw dust or any mixture thereof.

In an embodiment, the wood-based fibrous material comprises a material selected from the group consisting of crushed recycled wood material, wood chips, saw dust and any mixture thereof.

In an embodiment, the wood-based fibrous material is or consists of a material selected from the group consisting of crushed recycled wood material, wood chips, saw dust and any mixture thereof.

In principle, the biosludge may be obtainable or derived from any process that involves an aerobic waste water treatment process.

In an embodiment, the biosludge is obtainable from the treatment process of waste water obtainable from a pulping process or municipal sewage.

In an embodiment, the biosludge is obtainable from the treatment process of waste water obtainable from a pulping process, a chemical pulping process, or a papermaking process.

In an embodiment, the mixture is dried after the pressure is released. This may be done e.g. by discharging the mixture to a dryer. The drying may be done under pressure. In an embodiment, the mixture is dried under a pressure lower than 5 bar, or lower than 4 bar, or lower than 2 bar, or a pressure in the range of 1 - 5 bar, or a pressure of about 1 bar, or an ambient pressure. In an embodiment, the mixture is dried at a temperature in the range of 20 - 150°C, or in the range of 50 - 150°C, or in the range of 70 - 140°C.

In an embodiment, the mixture is burned after releasing the pressure.

In an embodiment, the mixture is pelletized after releasing the pressure.

In an embodiment, the mixture is pelletized and burned after releasing the pressure.

In an embodiment, the mixture is burned in a combined heat and power boiler or in a lime kiln.

In an embodiment, the method comprises
- mixing biosludge with bark to form a mixture, wherein the dry matter of the biosludge is at least 0.01 % (w/w) of the total dry matter of the mixture;
- treating the mixture at a temperature in the range of 160 - 295°C under pressure in the presence of steam; and
- releasing the pressure suddenly or explosively.

In an embodiment, the method comprises
- mixing biosludge with bark to form a mixture, wherein the dry matter of the biosludge is at least 0.01 % (w/w) of the total dry matter of the mixture;
- compressing the mixture to form a cake and feeding the cake by forcing the mixture through a plug screw into a reactor for treating the mixture at a temperature in the range of 160 - 295°C under pressure in the presence of steam;
- treating the mixture at a temperature in the range of 160 - 295°C under pressure in the presence of steam; and
- releasing the pressure suddenly or explosively.

Such a method may be implemented as a continuous process.

A product obtainable by the method according to one or more embodiments of the invention is also disclosed.

The product typically has a brown or brownish colour and has a peat-like consistency.

The use of the product obtainable by the method according to one or more embodiments of the invention for the production of energy is also disclosed.

The use of the product obtainable by the method according to one or more embodiments of the invention as a fertilizer is also disclosed.

The use of the product obtainable by the method according to one or more embodiments of the invention for improving the quality of soil material is also disclosed.

The embodiments of the invention described hereinbefore may be used in any combination with each other. Several of the embodiments may be combined together to form a further embodiment of the invention. A method, to which the invention is related, may comprise at least one of the embodiments of the invention described hereinbefore.

An advantage is that the product obtainable by the method has a high dry matter content. It may thus be burned with high energy efficiency. The burning of the product may produce more thermal energy than is required for producing the product. The product also has a relatively low content of contaminants, such as NPEs, potassium, chloride and heavy metals.

An advantage of the present invention is that the method removes a significant amount of NPEs from the biosludge.

An advantage of the present invention is that the method increases the energy content of the biosludge significantly. This provides much broader possibilities of using a broader variety of biosludges for energy production.

An advantage of the present invention is that the method is robust and relatively energy efficient. The product may be dried and further used or processed in an energy efficient manner.

An advantage is that the product obtainable by the method is typically sterile and has a less offending odour than raw biosludge.

An advantage of the present invention is that it allows for the efficient removal and disposal of phosphorus, NPEs and other components present in waste water and in the biosludge obtained from the waste water.

An advantage of the present invention is that the method may be implemented continuously.

An advantage of the present invention is that the biosludge may be formulated in a manner that allows efficient treatment and disposing of the biosludge. The mixture comprising the biosludge may exhibit a favourable compressibility and an ability to bind the mixture together. It may therefore allow the biosludge to be provided in a form suitable for being compressed e.g. using a plug screw and fed into a reactor for treating it at a temperature of 160-295°C under pressure in the presence of steam.

An advantage of the present invention is that the need to dewater the biosludge prior to treatment may be decreased or even eliminated.

### EXAMPLES

Reference will now be made in detail to the embodiments of the present invention, an example of which is illustrated in the accompanying drawing.

The description below discloses some embodiments of the invention in such a detail that a person skilled in the art is able to utilize the invention based on the disclosure. Not all steps of the embodiments are discussed in detail, as many of the steps will be obvious for the person skilled in the art based on this specification.

Figure 1 illustrates a reactor system that may be used to implement a method according to one embodiment of the present invention for the treatment of biosludge.

The mixture of biosludge and bio-based material 1 is fed into the system from a bulk container 2. From the bulk container 2, the mixture travels on a belt conveyor 3, at the end of which a leveller 4, for instance a rake or a brush, levels the mixture. The levelled mixture is fed through a force feed screw 5 and further through a plug screw feeder 6. The plug screw feeder 6 is upright in this embodiment and has a downwards tapering cross-section. The housing of the plug screw feeder 6 contains perforations (not shown in the Figure) through which water may pass. As the mixture is forced through the plug screw feeder 6, water is removed as pressate 7. The mixture forms a compact cake at the lower end of the plug screw feeder 6. This compact cake is impermeable to steam. The cake is forced to a reactor vessel 8. In this embodiment, the reactor vessel 8 is also a plug screw. Steam 9 is fed into the reactor vessel 8. In this exemplary embodiment, the pressure in the reactor vessel may be about 3 - 4 bar and and temperature about 200 - 220°C. At the end of the reactor vessel 8, the pressure is released by passing the treated mixture to a discharge 10. The discharge 10 may comprise e.g. a plug screw. The pressure in the discharge 10 is significantly lower than 3 - 4 bar, for instance about 1 bar. The discharged mixture is conveyed to a dryer 11, and the dried product 12 is recovered.

### EXAMPLE 1 - Treatment of biosludge

A batch of biosludge having a dry matter content of 4.7 % was treated in trial runs. A mixture of bark from both softwood and hardwood having a dry matter content of 47 % was hammer milled using a separation plate with 20 mm screen hole diameter and dewatered. The dewatered bark mixture was mixed with the biosludge by gentle mixing in a concrete blender. Mixtures in which the dry matter of the biosludge was 2.5 % or 5 % (w/w) of the total dry matter of the mixture were obtained.

The mixture was first fed using a force feed screw to a plug screw. In the plug screw, some of the water contained in the mixture was removed as pressate and the mixture was compressed. The compressed mixture was fed by a plug screw to a horizontal reactor into which was steam was fed. The parameters of the treatment in the reactor in different runs were as follows:

| | |
|---|---|
| Residence time (minutes) | 3.4 - 5.1 |
| Force feed screw (kW) | 0.5 - 0.7 |
| Plug screw (kW) | 1.3 - 1.8 |
| Plug screw (rpm) | 18.0 - 26.2 |
| Reactor inlet (°C) | 181.8 - 194.3 |
| Reactor outlet (°C) | 169.1 - 178.2 |
| Reactor steam temp (°C) | 202.2 - 204.9 |
| Reactor pressure (bar) | 15.3 - 16.1 |
| Feed rate | 54 kg/h |
| Steam flow | 510 kg/h |

The pressure was released explosively by discharging the treated mixture to a pressure of about 3.8 bar. The discharged mixture was conveyed to a dryer. The conditions in the dryer were as follows:

| | |
|---|---|
| Dryer inlet (°C) | 124.4 - 138.2 |
| Dryer outlet (°C) | 74.2 - 82.6 |
| Dryer burner (°C) | 279.6 - 383.7 |
| Dryer pressure (bar) | 3.8 |

After each run, a sample was collected from the in feed, from the collected plug screw pressate and from the dried final product. Mass balances measured indicated that about 50 % of the biosludge included in the mixture entered the reactor.

The treatment was performed without any unexpected runnability disturbances. The mixture was well dewatered.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method for the treatment of biosludge, wherein the method comprises
- mixing biosludge with a bio-based material to form a mixture, wherein the dry matter of the biosludge is at least 0.01 % (w/w) of the total dry matter of the mixture, and wherein the bio-based material is bark;
- treating the mixture at a temperature in the range of 160 -295°C under pressure in the presence of steam; and
- releasing the pressure suddenly or explosively to disrupt the structure of the mixture.

2. The method according to claim 1, wherein the dry matter of the biosludge is at least 0.1 % (w/w), or at least 1 % (w/w), or at least 2 % (w/w), or at least 5 % (w/w), or 0.01 - 40 % (w/w), or 0.1 - 20 % (w/w), or 1 - 10 % (w/w), or 2 - 5 % (w/w) of the total dry matter of the mixture.

3. The method according to claim 1 or 2, wherein the mixture is treated at a temperature in the range of 160 - 295°C under pressure in the presence of steam for 1 - 60 minutes, or for 1 - 5 minutes, or for 5 - 30 minutes.

4. The method according to any one of claims 1 - 3, wherein the pressure is at least 2 bar, or at least 3 bar, or at least 10 bar, or in the range of 2 - 50 bar, or in the range of 3 - 10 bar, or in the range of 10 - 20 bar.

5. The method according to any one of claims 1 - 4, wherein the pressure is released to a pressure lower than 5 bar, or lower than 4 bar, or lower than 2 bar, or to about 1 bar, or to ambient pressure.

6. The method according to any one of claims 1 - 5, wherein the pressure is released by lowering the pressure by at least 50 % of the pressure, or by 60 % of the pressure, or by at least 70 % of the pressure, or by at least 75 % of the pressure.

7. The method according to any one of claims 1 - 6, wherein the mixture is treated at a temperature in the range of 215 - 295°C, or in the range of 160 - 260°C, or in the range of 200 - 230°C or in the range of 190 - 230°C, or in the range of 190 - 220°C.

8. The method according to any one of claims 1 - 7, wherein the mixture is dewatered prior to treating the mixture at a temperature in the range of 160 -295°C under pressure in the presence of steam.

9. The method according to any one of claims 1 - 8, wherein the mixture is compressed to form a cake prior to treating the mixture at a temperature in the range of 160 -295°C under pressure in the presence of steam.

10. The method according to claim 9, wherein the mixture is compressed by forcing the mixture through a plug screw.

11. The method according to any one of claims 1 - 10, wherein the biosludge is obtainable from the treatment process of waste water obtainable from a pulping process, a chemical pulping process, or a papermaking process.

12. The method according to any one of claims 1 - 11, wherein the biosludge is obtainable from the treatment process of waste water obtainable from municipal sewage.

13. The method according to any one of claims 1 - 12, wherein the mixture is burned or pelletized and burned after releasing the pressure.

14. The method according to claim 13, wherein the mixture is burned in a combined heat and power boiler or in a lime kiln.

15. The method according to any one of claims 1 - 14, wherein the method is implemented as a continuous process.

## Patentansprüche

1. Verfahren zur Behandlung von Bioschlamm, wobei das Verfahren umfasst:
- ein Mischen des Bioschlamms mit einem biologisch basierten Material, um eine Mischung auszubilden, wobei die Feststoffe des Bioschlamms mindestens 0,01 % (w/w) der gesamten Feststoffe der Mischung ausmachen, und wobei das biologisch basierte Material Rinde ist;
- ein Behandeln der Mischung bei einer Temperatur im Bereich von 160 - 295 °C unter Druck in der Anwesenheit von Dampf; und
- ein plötzliches oder explosives Lösen des Drucks, um die Struktur der Mischung aufzubrechen.

2. Verfahren nach Anspruch 1, wobei die Feststoffe des Bioschlamms mindestens 0,1 % (w/w), oder mindestens 1 % (w/w), oder mindestens 2 % (w/w), oder mindestens 5 % (w/w), oder 0,01 - 40 % (w/w), oder 0,1 - 20 % (w/w), oder 1 - 10 % (w/w), oder 2 - 5 % (w/w) der gesamten Feststoffe der Mischung ausmachen.

3. Verfahren nach Anspruch 1 oder 2, wobei die Mischung bei einer Temperatur im Bereich von 160 - 295°C unter Druck in der Anwesenheit von Dampf für 1 - 60 Minuten, für 1 - 5 Minuten oder für 5 - 30 Minuten behandelt wird.

4. Verfahren nach einem der Ansprüche 1-3, wobei der Druck mindestens 2 bar oder mindestens 3 bar oder mindestens 10 bar beträgt oder im Bereich von 2 - 50 bar, oder im Bereich von 3 - 10 bar, oder im Bereich von 10 - 20 bar liegt.

5. Verfahren nach einem der Ansprüche 1-4, wobei der Druck auf einen Druck von weniger als 5 bar, oder weniger als 4 bar, oder weniger als 2 bar, oder weniger als ungefähr 1 bar, oder auf Umgebungsdruck gelöst wird.

6. Verfahren nach einem der Ansprüche 1-5, wobei der Druck durch ein Absenken des Drucks um mindestens 50 % des Drucks, oder um 60 % des Drucks, oder um mindestens 70% des Drucks, oder um mindestens 75% der Drucks, gelöst wird.

7. Verfahren nach einem der Ansprüche 1-6, wobei die Mischung bei einer Temperatur im Bereich von 215 - 295°c, oder im Bereich von 160 - 260 °C, oder im Bereich von 200 - 230 °C, oder im Bereich von 190 - 230°C, oder im Bereich von 190 - 220°C behandelt wird.

8. Verfahren nach einem der Ansprüche 1-7, wobei die Mischung vor einem Behandeln der Mischung bei einer Temperatur im Bereich von 160 - 295°C unter Druck in Anwesenheit von Dampf entwässert wird.

9. Verfahren nach einem der Ansprüche 1-8, wobei die Mischung vor einem Behandeln der Mischung bei einer Temperatur im Bereich von 160 - 295°C unter Druck in Anwesenheit von Dampf komprimiert wird, um einen Kuchen auszubilden.

10. Verfahren nach Anspruch 9, wobei die Mischung durch ein Drücken der Mischung durch eine Stopfschnecke komprimiert wird.

11. Verfahren nach einem der Ansprüche 1-10, wobei der Bioschlamm aus dem Behandlungsprozess von Abwasser erhalten werden kann, das aus einem Aufschlussverfahren, einem chemischen Aufschlussverfahren oder einem Papierherstellungsverfahren erhalten werden kann.

12. Verfahren nach einem der Ansprüche 1-11, wobei der Bioschlamm aus dem Behandlungsverfahren für Abwasser erhalten werden kann, das aus kommunalem Abwasser erhalten werden kann.

13. Verfahren nach einem der Ansprüche 1-12, wobei die Mischung nach einem Lösen des Drucks verbrannt wird oder pelletiert und verbrannt wird.

14. Verfahren nach Anspruch 13, wobei die Mischung in einem Kraft-Wärme-Kopplungskessel oder in einem Kalkofen verbrannt wird.

15. Verfahren nach einem der Ansprüche 1-14, wobei das Verfahren als ein kontinuierlicher Prozess implementiert ist.

## Revendications

1. Procédé pour le traitement de boues biologiques, dans lequel le procédé comprend
- mélanger les boues biologiques avec un matériau à base biologique pour former un mélange, dans lequel la matière sèche des boues biologiques représente au moins 0,01 % (p/p) de la matière sèche totale du mélange, et dans lequel le matériau à base biologique est de l'écorce ;
- traiter le mélange à une température dans la plage 160-295°C, sous pression et en présence de vapeur ; et
- relâcher la pression soudainement ou de manière explosive pour briser la structure du mélange.

2. Procédé selon la revendication 1, dans lequel la matière sèche des boues biologiques représente au moins 0,1 % (p/p), ou au moins 1 % (p/p), ou au moins 2 % (p/p), ou au moins 5 % (p/p), ou 0,01 - 40 % (p/p), ou 0,1 - 20 % (p/p), ou 1 - 10 % (p/p), ou 2 - 5 % (p/p) de la matière sèche totale du mélange.

3. Procédé selon la revendication 1 ou 2, dans lequel le mélange est traité à une température dans la plage 160 - 295°C, sous pression et en présence de vapeur pendant 1 - 60 minutes, ou pendant 1 - 5 minutes, ou pendant 5 - 30 minutes.

4. Procédé selon l'une quelconque des revendications 1 - 3, dans lequel la pression est d'au moins 2 bar, ou d'au moins 3 bar, ou d'au moins 10 bar, ou dans la plage 2 - 50 bar, ou dans la plage 3 - 10 bar, ou dans la plage 10 - 20 bar.

5. Procédé selon l'une quelconque des revendications 1 - 4, dans lequel la pression est relâchée jusqu'à une pression inférieure à 5 bar, ou inférieure à 4 bar, ou inférieure à 2 bar, ou jusqu'à environ 1 bar, ou jusqu'à la température ambiante.

6. Procédé selon l'une quelconque des revendications 1 - 5, dans lequel la pression est relâchée en abaissant la pression d'au moins 50 % de la pression, ou de 60 % de la pression, ou d'au moins 70 % de la pression, ou d'au moins 75 % de la pression.

7. Procédé selon l'une quelconque des revendications 1 - 6, dans lequel le mélange est traité à une température dans la plage 215 - 295°C, ou dans la plage 160 - 260°C, ou dans la plage 200 - 230°C ou dans la plage 190 - 230°C, ou dans la plage 190 - 220°C

8. Procédé selon l'une quelconque des revendications 1 - 7, dans lequel le mélange est déshydraté avant le traitement du mélange à une température dans la plage 160 - 295°C, sous pression et en présence de vapeur.

9. Procédé selon l'une quelconque des revendications 1 - 8, dans lequel le mélange est compressé pour former un gâteau avant le traitement du mélange à une température dans la plage 160 - 295°C, sous pression et en présence de vapeur.

10. Procédé selon la revendication 9, dans lequel le mélange est compressé en forçant le mélange à travers un convoyeur à vis.

11. Procédé selon l'une quelconque des revendications 1 - 10, dans lequel les boues biologiques sont aptes à être obtenues à partir du processus de traitement d'eaux usées aptes à être obtenues à partir d'un processus de défibrage, d'un processus de défibrage chimique, ou d'un processus de fabrication de papier.

12. Procédé selon l'une quelconque des revendications 1 - 11, dans lequel les boues biologiques sont aptes à être obtenues à partir du processus de traitement d'eaux usées aptes à être obtenues à partir d'égouts municipaux.

13. Procédé selon l'une quelconque des revendications 1 - 12, dans lequel le mélange est brûlé ou aggloméré en boulettes et brûlé après le relâchement de la pression.

14. Procédé selon la revendication 13, dans lequel le mélange est brûlé dans une chaudière de production de chaleur et d'électricité combinée ou dans un four à chaux.

15. Procédé selon l'une quelconque des revendications 1 - 14, dans lequel le procédé est implémenté en tant que processus continu.
